# FASCICULE DE BREVET EUROPEEN

(11) **EP 0 811 048 B1**
(45) Date de publication et mention de la délivrance du brevet: **12.06.2002**
(21) Numéro de dépôt: 95903392.9
(22) Date de dépôt: 09.12.1994
(51) Int. Cl.: C11B 7/00, A23D 9/00, A23C 15/14

(54) **PROCEDE DE SEPARATION D'UNE MATIERE GRASSE ANHYDRE EN FRACTIONS A HAUTS ET BAS POINTS DE FUSION ET DISPOSITIF DE MISE EN OEUVRE**
VERFAHREN ZUR TRENNUNG EINES WASSERFREIEN FETTES IN HOCH- UND NIEDRIGSCHMELZENDEN FRAKTIONEN UND VORRICHTUNG ZUR DURCHFÜHRUNG DES VERFAHRENS
METHOD FOR SEPARATING AN ANHYDROUS FAT INTO HIGH AND LOW MELTING POINT FRACTIONS, AND DEVICE THEREFOR

(30) Priorité: 10.12.1993 FR 9315023
(43) Date de publication de la demande: 10.12.1997
(73) Titulaire: UNION BEURRIERE, 70003 Vesoul Cédex (FR)
(72) Inventeur: PARMENTIER, Michel, 54740 Vaudeville (FR); JOURNET, Bernard, 70360 Ferrières-les-Scey (FR); BORNAZ, Salina, 2080 Ariana (TN)
(74) Mandataire: Ballot, Paul Denis Jacques
(86) Numéro de dépôt international: FR9401448
(87) Numéro de publication internationale: WO9516012

(56) Documents cités:
- EP-A- 0 062 938
- EP-A- 0 095 001
- EP-A- 0 397 233
- EP-A- 0 399 597
- JOURNAL OF DAIRY SCIENCE, vol.64, 1981 pages 1861 - 1862 G.J. MILLER ET AL 'RAPID EXTRACTION OF MILK FAT'

## Description

La présente invention concerne un procédé de séparation d'une huile ou d'une matière grasse anhydre en phase liquide hydrophobe en une fraction à hauts points de fusion et une fraction à bas points de fusion. Elle concerne également un dispositif pour la mise en oeuvre de ce procédé.

L'invention trouve une application particulièrement avantageuse à la fabrication de beurre à caractéristique texturale dure ou molle.

Dans la suite de ce mémoire et pour des raisons de simplicité, on entendra par matière grasse aussi bien une huile qu'une matière grasse proprement dite.

D'une manière générale, une matière grasse, qu'elle soit d'origine animale, comme les graisses, ou végétale, comme les huiles, est majoritairement constituée par des triesters de glycérol, appelés triglycérides, dont la variété et la composition en déterminent la spécificité. Pour ce qui concerne la fermeté des produits obtenus après butyrification par inversion de phase, il est connu que l'un des facteurs prépondérants est le rapport de la quantité de triglycérides à hauts points de fusion (HPF) à la quantité de triglycérides à bas points de fusion (BPF). Ce rapport est habituellement mesuré par le "Solid Fat Index", ou SFI, qui représente la quantité de solides, donc de triglycérides cristallisés, à une température donnée. Pour ce qui concerne les beurres et margarines, le SFI (20), ou taux de matières grasses solides à 20°C, est bien corrélé avec la fermeté mesurée aussi bien au pénétromètre à cône, qu'à la machine d'essai INSTRON (marque déposée). Ce SFI (20) peut donc servir de cible technique pour la préparation de beurres ou graisses à usages précis, c'est à dire dans les cas où :
- soit on recherche un ramollissement apportant un meilleur étalement de la matière, comme par exemple pour améliorer celui-ci dans les beurres d'hiver ;
- soit au contraire lorsque l'on recherche plutôt une plus grande fermeté à température élevée, pour des raisons techniques de mise en oeuvre ou pour l'élimination de l'apparition d'une texture finie "grasse", comme par exemple en pâtisserie et biscuiterie.

Jusqu'à présent, les techniques permettant un tel contrôle font appel à deux technologies :
- une technologie traditionnelle à base de traitements thermiques destinés à modifier les équilibres entre phases polymorphiques dans la matière grasse cristallisée. Ces techniques permettent de résoudre quelques difficultés, mais sont limitées en plage de variation. Elles ne permettent pas par exemple de compenser complètement l'effet saisonnier sur la fermeté des beurres.
- une technologie plus récente, fondée sur le fractionnement cryogénique d'une matière partiellement cristallisée, par filtration et/ou centrifugation.
La demande de brevet européen publiée sous le numéro EP-A-397 233 décrit un procédé de séparation d'une matière grasse anhydre en fractions utilisant cette technologie. Cependant, cette technique peut être appliquée aussi bien dans le cadre d'une matière grasse anhydre pure, par exemple la Matière Grasse Laitière Anhydre ou MGLA, que de solutions de telles graisses ou huiles dans des solvants généralement polaires. La séparation qui suit la cristallisation fractionnante peut faire appel à trois solutions techniques, dont la filtration simple, la centrifugation, et la filtration sur membrane semi-perméable. Cette dernière technique a été particulièrement préconisée pour des séparations spécifiques dans un solvant, dans le but par exemple d'extraire ou d'enrichir en un composant particulier : cholestérol, phospholipides, etc.

Cette technologie de cryofractionnement permet d'obtenir des fractions bien spécifiques, mais elle met en oeuvre un appareillage lourd, de conduite délicate, et fourni des produits finis chers et fortement différenciés par rapport à la matière originale, par exemple le beurre. Pour obtenir une modification partielle de SFI dans un beurre, il faut alors lui ajouter des quantités significatives de fractions à hauts ou bas points de fusion. Une telle opération, qui conduit au résultat recherché en termes de texture, a l'inconvénient double de dénaturer fortement la matière grasse et d'augmenter considérablement son prix de revient.

Aussi, la présente invention a précisément pour but de proposer un procédé de séparation d'une matière grasse anhydre en phase liquide hydrophobe en une fraction à hauts points de fusion et une fraction à bas points de fusion, procédé qui permettrait d'obtenir les mêmes performances du point de vue texture que le procédé connu de cryofractionnement, mais à un coût beaucoup plus faible et sans altérer la matière grasse elle-même.

Ce but est atteint, conformément à l'invention, du fait que ledit procédé comporte une étape de filtration tangentielle de ladite matière grasse anhydre en phase liquide hydrophobe sur une membrane hydrophobe conduisant à la séparation de ladite matière en un rétentat de filtration constituant ladite fraction à hauts points de fusion et en un perméat de filtration constituant ladite fraction à bas points de fusion.

La présente invention peut donc s'interpréter comme un procédé d'enrichissement d'une fraction, le perméat, en certains triglycérides, la plupart à bas points de fusion en même temps de l'autre fraction, le rétentat, s'enrichit en d'autres triglycérides, la plupart à hauts points de fusion. Il convient de noter que, bien que la plupart des exemples cités dans le présent mémoire concernent la matière grasse butyrique, le procédé selon l'invention donne des résultats également intéressants dans le domaine des huiles et graisses végétales ou animales.

L'enrichissement des fractions suivant le procédé de séparation de l'invention peut consister en un simple déséquilibre permettant d'obtenir, par exemple dans le cas d'un beurre, soit un beurre plus dur à partir du rétentat, soit un beurre plus mou à partir du perméat. Dans ce but, le rétentat ou le perméat obtenu est mélangé à une matière non grasse puis soumis à une opération de butyrification connue en soi. L'enrichissement peut toutefois être poursuivi jusqu'à un véritable fractionnement si le taux de recyclage est important et le taux d'extraction du perméat faible. A cet effet, il est prévu que le rétentat est réincorporé à la matière grasse anhydre en cours de filtration.

Ainsi, le procédé conforme à l'invention permet, à partir d'une matière grasse anhydre fondue, comme une MGLA à une température fixe, supérieure à 45°C, d'obtenir à volonté en fin de procédé un beurre à caractéristique soit de beurre d'hiver soit de beurre d'été. Si le fractionnement est poussé, il permet d'obtenir des matières grasses aux propriétés spécifiques, à usage particulier : spécialité laitière à tartiner, matières grasses dures...

Le procédé selon l'invention est fondé sur une séparation de type tri moléculaire de différents types de molécules triglycéridiques suivant leur taille, leur rayon de giration en milieu liquide hydrophobe, leur degré de saturation donc leur rigidité. Il consiste donc en une séparation, par filtration tangentielle sur une membrane hydrophobe de molécules lipidiques en milieu liquide notamment fondu, totalement hydrophobe. La matière grasse mise en oeuvre doit être rigoureusement anhydre, comme par exemple une MGLA. Elle doit rester fondue, par exemple à une température supérieur à 45°C pour une MGLA, et exempte de toute trace d'eau tout le long du processus de séparation.

L'objectif est d'obtenir en milieu hydrophobe des séparations de même type et de même efficacité que celles obtenues en ultrafiltration hydrophile sur les constituants hydrosolubles du lait ; ceci est obtenu en inversant complètement le sens des interactions qui sont à caractère hydrophile en ultrafiltration classique en milieu aqueux. Ces interactions sont à caractère intégralement hydrophobe dans le présent procédé.

Il faut souligner que l'eau est particulièrement nuisible au procédé selon l'invention, car sa présence dans la matière grasse en phase liquide produit une émulsion au niveau de la membrane et conduit à un colmatage très rapide, entraînant une augmentation de la pression transmembranaire et la chute du débit d'extraction.

Le procédé de l'invention s'applique donc à des matières grasses en phase liquide (huiles à température moyenne, ou graisse à température supérieure à leur point de fusion) qui doivent être mises en oeuvre sans eau, afin d'obtenir le milieu le plus hydrophobe dans un milieu et sur une membrane hydrophobe.

La membrane utilisée doit avoir le caractère hydrophobe le plus élevé possible, ce qui est obtenu par exemple à partir de membranes en métal fritté ou en mettant en oeuvre des polymères fortement hydrophobes de type téflon entre autres.

Le caractère de porosité de la membrane a plus d'influence sur les conditions hydrodynamiques de fonctionnement (pression transmembranaire et débits) que sur l'efficacité et la sélectivité de la membrane. En effet dans tous les cas, de diamètre de pores (0,005 à 1,0µm) est très largement supérieur au rayon de giration des molécules à séparer. Le tri moléculaire qui s'opère sur la membrane n'est donc pas seulement dû à un effet purement stérique et fluidique : il est le résultat de l'interaction hydrophobe entre particule et surface membranaire qui se traduit en terme d'adsorption différentielle sur cette surface, avec un effet global de rétention ou de transparence suivant la molécule considérée.

Ainsi, une telle interaction dépend à la fois de la molécule de triglycéride (taille, nature des acides gras, saturation, etc.) et de la membrane, par le biais des interactions hydrophobes qu'elle est capable de générer au contact de la molécule. Comme ces interactions extrêmement complexes ne sont pas identiques d'une molécule à l'autre, il s'en suit le phénomène de séparation recherché.

On notera par ailleurs que la séparation fondée sur ce type d'interaction hydrophobe peut avantageusement s'appliquer dans d'autres domaines que celui de l'industrie alimentaire, et notamment chaque fois que les milieux affectés par la séparation sont fortement hydrophobes, comme par exemple les mélanges d'hydrocarbures, provenant soit de la distillation du pétrole, soit de résidus en vue d'une dépollution ou d'une valorisation.

La description qui va suivre en regard des dessins annexés, donnés à titre d'exemples non limitatifs, fera bien comprendre en quoi consiste l'invention et comment elle peut être réalisée.

La figure 1 est une représentation schématique d'un dispositif pour la mise en oeuvre du procédé conforme à l'invention.

Les figures 2a à 2d montrent des graphes de rendement du procédé de l'invention pour des triglycérides mono-, di-, tri-insaturés et pour des triglycérides saturés.

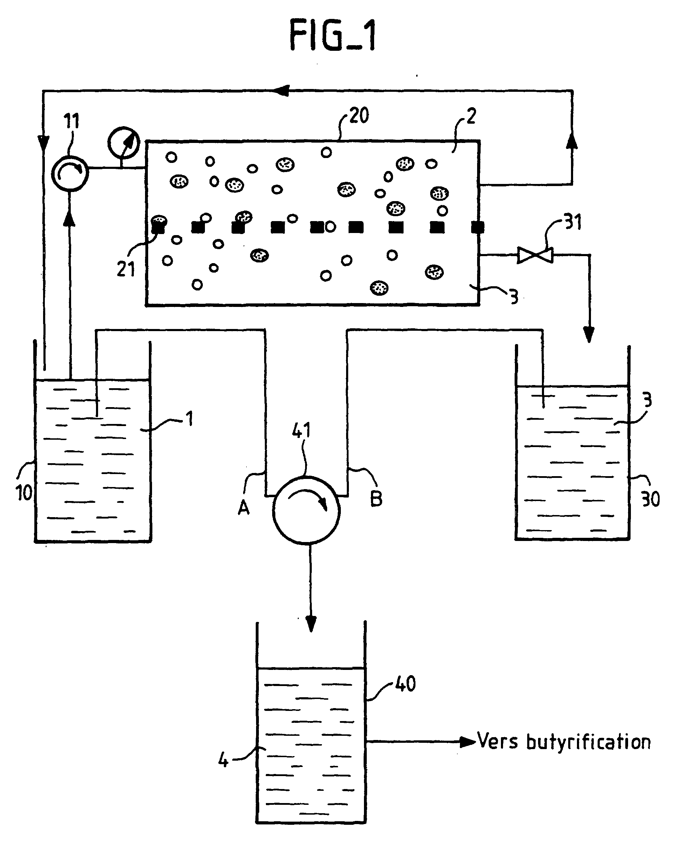

La figure 1 illustre de façon schématique un dispositif pour la mise en oeuvre d'un procédé de séparation d'une matière grasse anhydre en phase liquide hydrophobe, telle qu'une MGLA maintenue à une température supérieure à 45°C dans un bac 10 de lancement qui, dans le mode de réalisation représenté, fait également fonction de cuve de rétentat 2 recyclé lorsque celui-ci est réincorporé à la matière grasse anhydre 1 en cours de filtration. La MGLA est envoyée grâce à une pompe 11 dans un module 20 membranaire de filtration dans lequel ladite matière grasse 1 subit une filtration tangentielle sur une membrane hydrophobe 21 qui peut être constituée par un empilement d'une pluralité de membranes élémentaires à géométrique plane, comme dans le cas de la figure 1. Cependant, cette configuration particulière de membrane n'est nullement imposée par le procédé, objet de l'invention, et tous les types d'empilements plans ou radiaux peuvent être utilisés. La membrane 21 de filtration est réalisée en métal fritté, acier inoxydable fritté par exemple, ou encore en polymère hydrophobes comme le téflon, et présente une porosité comprise entre 0,005µm et 0,1µm.

La filtration tangentielle produite dans le module 20 sépare la MGLA en un rétentat 2 constituant une fraction à hauts points de fusion, qui est ici recyclé vers la cuve 10, et un perméat 3 constituant une fraction à bas points de fusion qui est extraite vers un bac 30 de stockage de perméat via une vanne 31 de réglage qui permet de modifier la pression transmembranaire et donc le débit d'extraction du perméat 3.

L'ensemble de l'installation doit être impérativement maintenu à une température au moins égale à 45°C dans l'exemple choisi, et toute présence d'eau dans le circuit soigneusement évitée.

La Demanderesse a montré qu'on pouvait obtenir, au moyen du procédé de l'invention, un rétentat 2 et un perméat 3 de SFI(20) respectif de 33 et de 26 à partir de la filtration tangentielle pendant 30 min d'une MGLA de SFI(20) moyen de 30.

La suite du procédé est facultative : en voie A, le rétentat 2 stocké dans la cuve 1 est envoyé par une deuxième pompe 41 dans une cuve 40 de mélange où il est mélangé à une matière non grasse 4, puis refroidi, et texturé dans une installation de butyrification classique, par exemple par l'utilisation d'échangeurs à surface raclée. Le beurre obtenu par la voie A est du type beurre d'hiver à caractéristique texturale "dure", tandis qu'en voie B mis en oeuvre de la même manière conduit à un beurre type beurre d'été de texture "molle".

Par ailleurs, il est important de noter que les modifications réelles mesurables de la composition de la matière grasse butyrique sont très faibles pour un tel résultat : il s'agit donc toujours d'un beurre, ce qui a une grande importance sur le plan de l'intérêt commercial.

Des intermédiaires en terme de propriétés texturales peuvent être obtenus selon le présent procédé a un mélange approprié des fractions en voie A ou B avec une matière grasse initiale donnée. En effet, les conditions de pilotage de la filtration tangentielle (taux de recyclage, débit d'extraction) permettent de conduire à des matières grasses plus ou moins différenciés, pouvant aller du simple déséquilibre en terme de SFI(20) jusqu'au véritable fractionnement.

Compte tenu des conditions particulières d'enrichissement, les produits obtenus par le procédé conforme à l'invention ne présentent pas le profil caractéristique des beurres connus additionnés de fractions, avec épaulements au niveau des hauts points de fusion. Au contraire, le profil du thermogramme de ces produits est analogue à celui du beurre, seul le rapport de surface entre HPF et BPF est différent, rapport qui sert pour le calcul de son SFI.

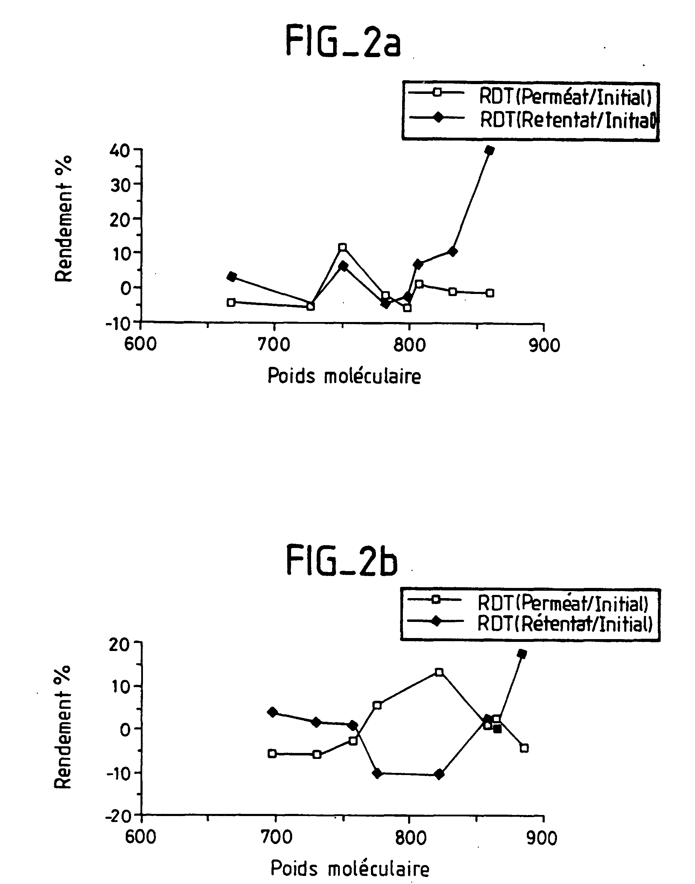

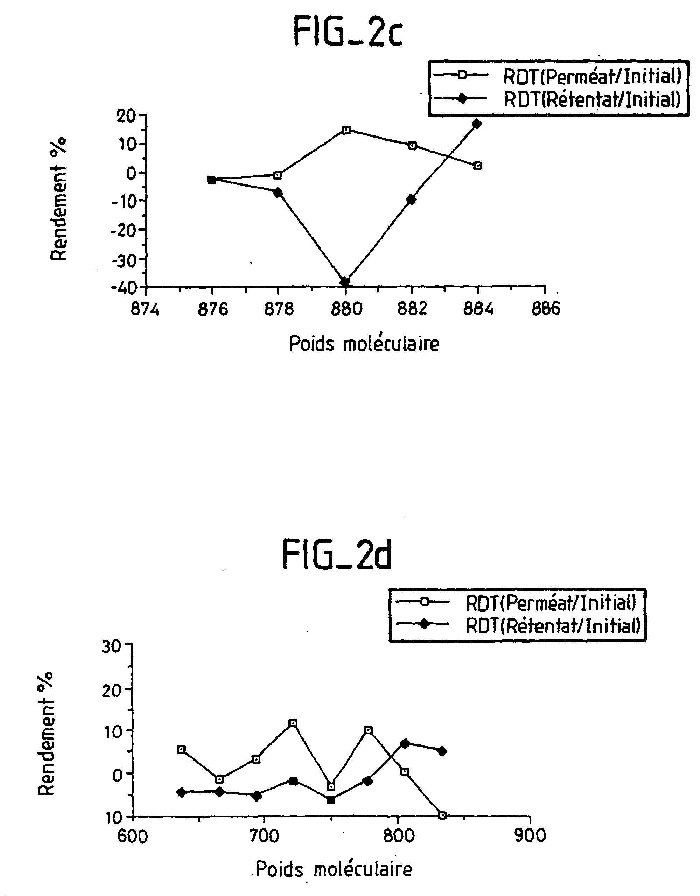

Les figures 2a à 2d représentent des graphes de rendement du procédé selon l'invention respectivement pour des triglycérides mono- ,di-, tri- insaturés et saturés. Chacun de ces graphes donne la proportion dans laquelle le rétentat et le perméat se sont enrichis ou appauvris en triglycérides en fonction de leur poids moléculaire, ce qui est un bon indicateur des points de fusion tant que l'on reste dans des molécules de même type de saturation.

## Revendications

1. Procédé de séparation d'une matière grasse anhydre en phase liquide hydrophobe en une fraction à hauts points de fusion et une fraction à bas points de fusion, **caractérisé en ce que** ledit procédé comporte une étape de filtration tangentielle de ladite matière grasse anhydre en phase liquide hydrophobe sur une membrane hydrophobe, conduisant à la séparation de ladite matière grasse en un rétentat de filtration constituant ladite fraction à hauts points de fusion et en un perméat de filtration constituant ladite fraction à bas points de fusion.

2. Procédé de séparation selon la revendication 1, **caractérisé en ce que** ledit rétentat est réincorporé à la matière grasse anhydre en cours de filtration.

3. Procédé de séparation selon l'une des revendications 1 ou 2, **caractérisé en ce que** le rétentat est mélangé à une matière non grasse puis soumis à une opération de butyrification.

4. Procédé de séparation selon l'une des revendications 1 ou 2, **caractérisé en ce que** le perméat obtenu est mélangé à une matière non grasse puis soumis à une opération de butyrification.

5. Application du procédé de séparation selon l'une quelconque des revendications 1 à 4 aux matières grasses animales anhydres fondues.

6. Application du procédé de séparation selon l'une quelconque des revendications 1 à 4 aux matières grasses végétales anhydres liquides ou fondues.

7. Application du procédé de séparation selon l'une quelconque des revendications 1 à 4 aux huiles minérales.

## Patentansprüche

1. Verfahren zur Trennung einer wasserfreien Fettsubstanz in hydrophober flüssiger Phase in eine Fraktion mit hohen Schmelzpunkten und eine Fraktion mit niedrigen Schmelzpunkten, **dadurch gekennzeichnet, daß** das Verfahren einen Schritt umfaßt, in dem eine Tangentialfiltration der wasserfreien Fettsubstanz in hydrophober flüssiger Phase durch eine hydrophobe Membran durchgeführt wird, die zur Trennung der Fettsubstanz in ein Filtrationsretentat, das die Fraktion mit hohen Schmelzpunkten bildet, und in ein Filtrationspermeat, das die Fraktion mit niedrigen Schmelzpunkten bildet, führt.

2. Trennverfahren nach Anspruch 1, **dadurch gekennzeichnet, daß** das Retentat im Laufe der Filtration wieder in die wasserfreie Fettsubstanz eingebracht wird.

3. Trennverfahren nach einem der Ansprüche 1 und 2, **dadurch gekennzeichnet, daß** das Retentat mit einer nicht fettigen Substanz vermischt wird und dann einer Buttererzeugung unterzogen wird.

4. Trennverfahren nach einem der Ansprüche 1 und 2, **dadurch gekennzeichnet, daß** das erhaltene Permeat mit einer nicht fettigen Substanz vermischt wird und dann einer Buttererzeugung unterzogen wird.

5. Anwendung des Trennverfahrens nach einem der Ansprüche 1 bis 4 auf geschmolzene wasserfreie tierische Fettsubstanzen.

6. Anwendung des Trennverfahrens nach einem der Ansprüche 1 bis 4 auf flüssige oder geschmolzene wasserfreie pflanzliche Fettsubstanzen.

7. Anwendung des Trennverfahrens nach einem der Ansprüche 1 bis 4 auf Mineralöle.

## Claims

1. Process for separation of an anhydrous fatty material in the hydrophobic liquid phase into a fraction with high melting points and a fraction with low melting points, **characterised by** the fact that the said process includes a step of tangential filtration of the said anhydrous fatty material in the hydrophobic liquid phase over a hydrophobic membrane, leading to the separation of the said fatty material into a filtration retentate forming the said fraction with high melting points and into a filtration permeate forming the said fraction with low melting points.

2. Process for separation as described in claim 1, **characterised by** the fact that the said retentate is reincorporated with the anhydrous fatty material in the course of filtration.

3. Process for separation as described in one of claims 1 or 2, **characterised by** the fact that the retentate is mixed with a non-fatty material and then subjected to a butyrification operation.

4. Process for separation as described in one of claims 1 or 2, **characterised by** the fact that the permeate obtained is mixed with a non-fatty material and then subjected to a butyrification operation.

5. Application of the process for separation as described in any one of claims 1 to 4 to melted anhydrous animal fatty materials.

6. Application of the process for separation as described in any one of claims 1 to 4 to liquid or melted anhydrous vegetable fatty materials.

7. Application of the process for separation as described in any one of claims 1 to 4 to mineral oils.
